# EUROPÄISCHE PATENTSCHRIFT

(11) **EP 0 508 096 B1**
(45) Veröffentlichungstag und Bekanntmachung des Hinweises auf die Patenterteilung: **12.10.1994**
(21) Anmeldenummer: 92103665.3
(22) Anmeldetag: 04.03.1992
(51) Int. Cl.: F16B 13/12, B21K 1/76

(54) **Verfahren zur Herstellung eines Spreizdübels aus Metall**
Method of making an expanding dowel of metal
Procédé de fabrication d'une cheville d'expansion en métal

(30) Priorität: 11.04.1991 DE 4111587
(43) Veröffentlichungstag der Anmeldung: 14.10.1992
(73) Patentinhaber: fischerwerke Artur Fischer GmbH & Co. KG, D-72178 Waldachtal (DE)
(72) Erfinder: Fischer, Artur, Prof. Dr. h. c., W-7244 Waldachtal 3/Tumlingen (DE)

(56) Entgegenhaltungen:
- DE-A- 3 400 475
- DE-A- 3 742 496
- FR-A- 1 151 212
- FR-A- 2 345 612
- US-A- 1 372 035

## Beschreibung

Die Erfindung betrifft ein Verfahren zur Herstellung eines Spreizdübels aus Metall, bestehend aus einer Spreizhülse mit Spreizteil und einem Spreizstift gemäß der Gattung des Anspruches 1.

Spreizhülsen mit einem durch Längsschlitze und eine sich verjüngende Innenbohrung gebildeten Spreizteil werden in der Regel im Drehverfahren aus Vollmaterial hergestellt. Die Innenbohrung der Spreizhülse wird ausgebohrt, wobei die Verjüngung der Innenbohrung durch eine entsprechend geschliffene Bohrerspitze oder durch Ausdrehen erzeugt wird. Dieses spanabhebende Verfahren ist sehr zeit- und kostenaufwendig, so daß auch schon vorgeschlagen wurde, die Spreizhülse aus einer Blechplatine zu stanzen und zur Bildung der Verjüngung der Innenbohrung Stanzlappen in die Innenbohrung einzubiegen. Bei diesem Herstellverfahren sind für die Spreizhülse jedoch nur dünne Blechstärken verwendbar, so daß mit einem derart hergestellten Spreizdübel keine hohen Haltekräfte errreichbar sind. Ferner ergibt sich bei diesem Herstellverfahren kein ansatzloser Übergang vom zylindrischen Teil der Innenbohrung zur Verjüngung, was einen mit einer Zuspitzung versehenen Spreizstift zur Verankerung des Spreizdübels erforderlich macht. Durch die Zuspitzung des Spreizstiftes geht jedoch Aufspreizwirkung verloren, was insbesondere bei einer Verankerung des Spreizdübels in einem hinterschnittenen Bohrloch zu erheblich reduzierten Haltewerten führt.

Der Erfindung liegt die Aufgabe zugrunde, ein kostengünstiges Herstellverfahren für einen Spreizdübel zu schaffen, der hohe Haltewerte insbesondere in einem eine konische Erweiterung aufweisenden Bohrloch eines Bauteiles aufweist.

Die Lösung dieser Aufgabe wird bei dem Verfahren zur Herstellung eines Spreizdübels der eingangs genannten Gattung durch die im Hauptanspruch angegebenen Merkmale erreicht. Ausgangspunkt für die Bildung des mit einer sich verjüngenden Innenbohrung versehenen Spreizteiles ist eine Spreizhülse mit einer auf ihrer ganzen Länge einen gleichen Durchmesser aufweisenden Innenbohrung. Die Spreizhülse ist entsprechend der durch das Stauchen entstehenden Verkürzung verlängert. Ferner ist es vorteilhaft, wenn die Längsschlitze des Spreizteiles durch Stanzen oder Fräsen bereits eingebracht sind.

Nach dem Überstülpen der Spreizhülse über den Dorn des Unterteils des Gesenkes wird mit dem Oberteil die Spreizhülse derart gestaucht, daß die Innenbohrung der Spreizhülse der Form des Dornes entsprechend plastisch verformt wird. Es entsteht somit eine sich verjüngende Innenbohrung der Spreizhülse, in die zur Verankerung des Dübels ein zylindrischer Spreizstift einschlagbar ist. Durch den Spreizstift werden die durch die Längsschlitze entstehenden Spreizlamellen in die Hinterschneidung des Bohrloches eines Bauteiles aufgespreizt und der Spreizdübel somit verankert. Durch diese Art der Herstellung der Spreizhülse kann ein günstiges Verhältnis zwischen dem Außendurchmesser des Spreizstiftes und der Wandungsstärke der Spreizhülse erreicht werden. Als besonders vorteilhaft hat sich erwiesen, wenn der Spreizstift eine der doppelten Wandungsstärke der Spreizhülse entsprechenden Durchmesser aufweist.

Die Spreizhülse kann entweder aus einem Rohr oder aus einer ausgestanzten Blechplatine bestehen, die anschließend zur zylindrischen Form gerollt wird. Zur Stabilisierung der Rollform ist es zweckmäßig, an den beiden Längsseiten der ausgestanzten Blechplatine Verbindungsmittel in Form von Nuten und Zapfen anzuordnen.

Zur Befestigung eines Gegenstandes kann die Spreizhülse mit einem Innen- oder Außengewinde, oder zur direkten Verspannung eines Gegenstandes an der Außenfläche eines Bauteiles mit einem umgebördelten Rand versehen sein.

In der Zeichnung sind Ausführungsbeispiele der Erfindung dargestellt.

Es zeigen:
- Figur 1: die über den Dorn des Gesenkes übergestülpte Spreizhülse,
- Figur 2: die Spreizhülse nach dem Stauchvorgang,
- Figur 3: die gestanzte Blechplatine der Spreizhülse,
- Figur 4: den in einem Bauteil verankerten Spreizdübel mit Außengewinde,
- Figur 5: den Spreizdübel mit Innengewinde und
- Figur 6: den Spreizdübel mit umgebördeltem Rand.

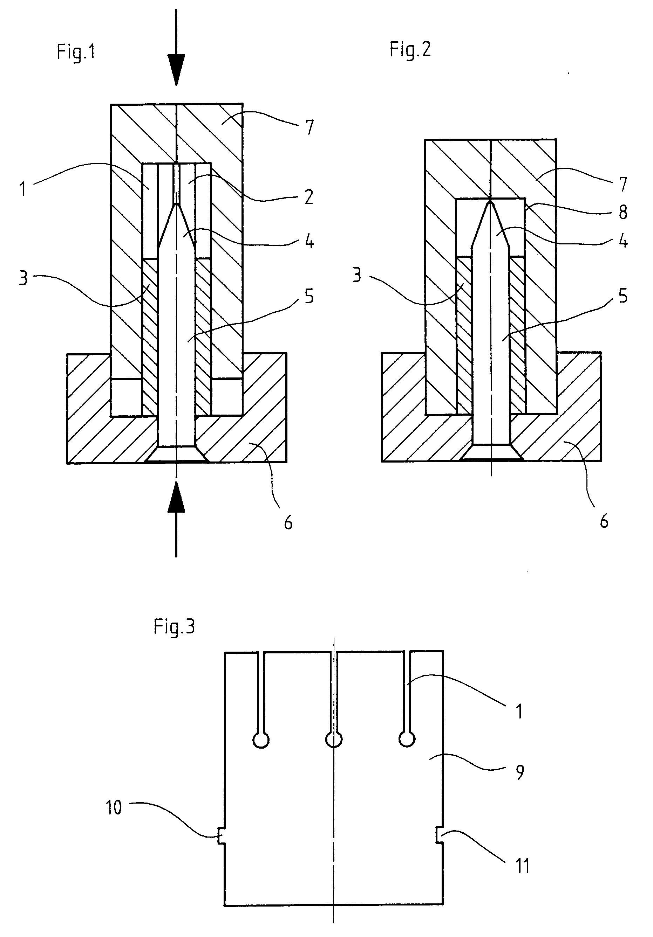

Bei dem in Figur 1 und 2 dargestellten Herstellverfahren ist die mit Längsschlitzen 1 und einer Innenbohrung 2 versehene Spreizhülse 3 über den mit einer Spitze 4 versehenen Dorn 5 des Gesenkunterteiles 6 gestülpt. Mit dem Gesenkoberteil 7 wird die Spreizhülse 3 derart gestaucht, daß sich die Spreizlamellen 8 an der Spitze 4 des Dornes 5 anlegen. Dadurch entsteht die Verengung der Innenbohrung 2 der Spreizhülse 3. Durch das Stauchen des Spreizteiles werden auch die Schlitze 1 verengt, die vorher durch Ausstanzen oder Fräsen in die Spreizhülse eingebracht wurden. Durch die Verengung der Längsschlitze wird die Spreizfläche des Spreizteiles vergrößert, so daß sich daraus erhöhte Haltewerte des Spreizdübels ergeben.

Die Spreizhülse kann entweder aus einem Rohr oder, wie in Figur 3 dargestellt, aus einem Blech zunächst ausgestanzt und anschließend zu einer zylindrischen Form gerollt werden. Die Stanzform 9 der Spreizhülse enthält bereits die eingestanzten Längsschlitze 1 sowie die beiden Verbindungsmittel an den Längsseiten der Blechplatine in Form eines Zapfens 10 und einer Nut 11.

Zur Verankerung des Spreizdübels wird die Spreizhülse 3 in das Bohrloch 12 eines Bauteiles 13 eingesetzt. Zweckmäßigerweise kann das Bohrloch 12 eine Hinterschneidung 14 aufweisen, um nach der Verankerung des Spreizdübels eine Formschlußverbindung mit dem Bauteil 13 zu erreichen. Die Verankerung der Spreizhülse 3 erfolgt durch Einschlagen eines zylindrischen Spreizstiftes 15. Durch den Spreizstift 15 werden die Spreizlamellen 8 in die Hinterschneidung 14 des Bohrloches 12 aufgespreizt. Zur Befestigung eines Gegenstandes 16 an dem Bauteil 13 wird auf das Außengewinde 17 der Spreizhülse 3 eine Mutter 18 aufgedreht.

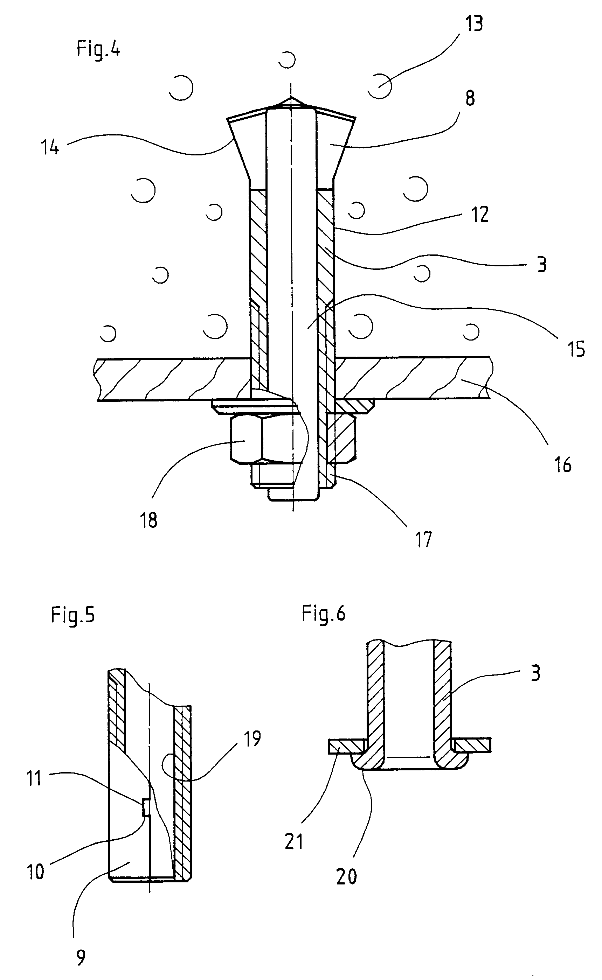

Gemäß Figur 5 kann die Spreizhülse 3 auch mit einem Innengewinde 19 versehen sein, in das zur Befestigung eines Gegenstandes eine Schraube (nicht dargestellt) eingedreht wird. Bei diesem Ausführungsbeispiel besteht die Spreizhülse aus einer gerollten Blechplatine, die über die ineinandergreifenden Verbindungmittel 10, 11 in Zylinderform zusammengehalten ist.

Mit dem umgebördelten Rand 20 der Spreizhülse 3 gemäß Figur 6 kann ein zu befestigender Gegenstand direkt gegen das Bauteil verspannt werden. Zur Vergrößerung der Auflagefläche ist es zweckmäßig, unter den Rand 20 eine Scheibe 21 anzuordnen.

## Patentansprüche

1. Verfahren zur Herstellung eines Spreizdübels aus Metall, bestehend aus einer Spreizhülse (3) mit einem Langsschlitze (1) und eine sich verjüngende Innenbohrung (2) aufweisenden Spreizteil und eine in die sich verjüngende Innenbohrung eintreibbaren zylindrischen Spreizstift (15) zur Verankerung des Spreizdübels in einem vorzugsweise eine konische Erweiterung (14) aufweisenden Bohrloch (12) eines Bauteiles (13), **dadurch gekennzeichnet**, daß zur Bildung des Spreizteiles in die eine durchgehende gleiche Innenbohrung (2) aufweisende Spreizhülse (3) ein mit einer Spitze (4) versehener Dorn (5) eingeführt und das vordere Ende der Spreizhülse (3) in einem Gesenk (6,7) derart gestaucht wird, daß die Innenbohrung (2) der Spreizhülse (3) der Spitze (4) des Dornes (5) entsprechend plastisch verformt wird.

2. Verfahren nach Anspruch 1, **dadurch gekennzeichnet**, daß die Spreizhülse (3) mit den Längsschlitzen (1) aus einer Blechplatine (9) gestanzt und anschließend zur zylindrischen Form gerollt ist.

3. Verfahren nach Anspruch 2, **dadurch gekennzeichnet**, daß an den beiden Längsseiten der ausgestanzten Blechplatine (9) Verbindungsmittel (10, 11) angeordnet sind, die beim Rollen der Spreizhülse ineinandergreifen.

4. Verfahren nach Anspruch 1, **dadurch gekennzeichnet**, daß der Spreizstift (15) einen der doppelten Wandungsstärke der Spreizhülse (3) entsprechenden Durchmesser aufweist.

5. Verfahren nach Anspruch 1, **dadurch gekennzeichnet**, daß die Speizhülse (3) an ihrem dem Spreizteil gegenüberliegenden Ende mit einem Innen- oder Außengewinde (17, 19) versehen ist.

6. Verfahren nach Anspruch 1, **dadurch gekennzeichnet**, daß die Spreizhülse (3) an ihrem dem Spreizteil gegenüberliegenden Ende mit einem umgebördelten Rand (20) versehen ist.

## Claims

1. A method of producing an expansible metal plug consisting of an expansible sleeve (3) with an expansible part having longitudinal slots (1) and a tapering internal bore (2), and a cylindrical expander bolt (15) which can be driven into the tapering internal bore to anchor the expansible plug in a drilled hole (12) in a component (13), the hole preferably having a conical widened section (14), characterized in that, to form the expansible part, a mandrel (5) provided with a point (4) is introduced into the expansible sleeve (3) having a continuous, uniform internal bore (2) and the front end of the expansible sleeve (3) is compressed in a die (6, 7) so that the internal bore (2) of the expansible sleeve (3) is plastically deformed so as to correspond to the point (4) of the mandrel (5).

2. A method according to claim 1, characterized in that the expansible sleeve (3) with longitudinal slots (1) is stamped from a sheet metal blank (9) and is subsequently rolled to form the cylindrical shape.

3. A method according to claim 2, characterized in that connecting means (10, 11), which interlock when the expansible sleeve is rolled, are arranged at the two longitudinal sides of the stamped-out sheet metal blank (9).

4. A method according to claim 1, characterized in that the expander bolt (15) has a diameter corresponding to twice the wall thickness of the expansible sleeve (3).

5. A method according to claim 1, characterized in that the expansible sleeve (3) is provided at its end lying opposite the expansible part with an internal or external thread (17, 19).

6. A method according to claim 1, characterized in that the expansible sleeve (3) is provided at its end lying opposite the expansible part with a turned-over edge (20).

## Revendications

1. Procédé de fabrication d'une cheville expansible en métal, composée d'une douille (3) comportant une partie expansible, à fente longitudinale (1) et alésage (2) de section décroissante, et d'une broche cylindrique (15) d'expansion, qui peut être enfoncée dans cet alésage de section décroissante pour ancrer la cheville dans un trou (12) d'un élément (13) de construction présentant avantageusement un chambrage (14) conique, procédé caractérisé en ce que, pour former la partie expansible dans la douille (3) qui comporte un alésage (2) de diamètre constant, on y introduit un mandrin (5) présentant une pointe (4) et l'on refoule la partie antérieure de cette douille (3) dans une matrice (6, 7) de façon à déformer plastiquement l'alésage (2) pour lui conférer une forme correspondant à celle de la pointe (4) du mandrin (5).

2. Procédé selon la revendication 1, caractérisé en ce que la douille (3) est formée par un flan (9), qui est découpé à la presse et comporte les fentes longitudinales (1), et qui est ensuite roulé en cylindre.

3. Procédé selon la revendication 2, caractérisé en ce qu'on forme, sur les deux grands côtés du flan (9) découpé, des éléments de jonction (10, 11) qui s'engagent l'un dans l'autre quand ce flan est enroulé en forme de douille.

4. Procédé selon la revendication 1, caractérisé en ce que la broche (15) d'expansion a un diamètre qui correspond au double de l'épaisseur de paroi de la douille expansible (3).

5. Procédé selon la revendication 1, caractérisé en ce que la douille expansible (3) présente, du côté opposé à sa partie expansible des filets intérieurs ou extérieurs (17, 19).

6. Procédé selon la revendication 1, caractérisé en ce que la douille expansible (3) comporte, du côté opposé à sa partie expansible, un rebord (20) rabattu.
